# EUROPÄISCHE PATENTSCHRIFT

(11) **EP 0 647 836 B1**
(45) Veröffentlichungstag und Bekanntmachung des Hinweises auf die Patenterteilung: **02.04.1997**
(21) Anmeldenummer: 93116141.8
(22) Anmeldetag: 06.10.1993
(51) Int. Cl.: G01G 19/18, B66C 13/16

(54) **Hebezeug mit Unterflasche ohne Schleppkabel**
Lifting apparatus with lower pulley without trailing cable
Machine de levage avec poulie basse sans câble d'enrouleur

(43) Veröffentlichungstag der Anmeldung: 12.04.1995
(73) Patentinhaber: ABUS Kransysteme GmbH & Co. KG., 51647 Gummersbach (DE)
(72) Erfinder: Bühne, Lothar, D-51647 Gummersbach (DE); Bube, Eckhard, D-51647 Gummersbach/Lieberhausen (DE)
(74) Vertreter: Dörner, Lothar, Dipl.-Ing.

(56) Entgegenhaltungen:
- DE-A- 3 111 865
- US-A- 4 696 359
- US-A- 5 072 798
- WAGEN UND DOSIEREN, Bd. 20, Nr. 2, März 1989, Mainz DE, Seiten 70-72, XP81282; "Mit dem Kran wiegen - ohne Haken und Oesen"
- PATENT ABSTRACTS OF JAPAN vol. 10, no. 210 (P-479) 23. Juli 1986; & JP-A-61 049 290

## Beschreibung

Die Erfindung betrifft ein Hebezeug, das mit einer Unterflasche versehen ist, in die ein Meßaufnehmer integriert ist.

Für eine Vielzahl industrieller Anwendungen, bei denen Hebezeuge, bevorzugt Seilzüge, eingesetzt werden, ist es vorteilhaft, die anhängende Last zu messen und über ein Auswertegerät zur Anzeige zu bringen. Die einfachste Lastmeßeinrichtung besteht in einer Kranwaage, die in den Haken des Hebezeugs eingehängt ist. Es ist bekannt, in diese Kranwaage ein LED- oder LCD-Display oder einen Drucker zu integrieren. Nachteilig bei dieser Art Wiegesystem sind die Verringerung der maximalen Hubhöhe, die begrenzte Einschaltdauer des Wiegesystems, da Akkumulatoren für seine Energieversorgung verwendet werden, und die schlechte Handhabung des Wiegesystems.

Mit Hebezeugen der eingangs genannten Art, also mit Hebezeugen, bei denen der Meßaufnehmer in die Unterflasche des Hebezeugs integriert ist, können die genannten Nachteile vermieden werden. Bei Hebezeugen dieser Art tritt jedoch das Problem auf, daß dann die Energieversorgung des Meßaufnehmers über ein Steuerkabel erfolgt, welches synchron mit dem Tragmittel für die Unterflasche aufgewickelt wird. Dies ist aufwendig und hat Störungen im Gefolge.

Hier will die Erfindung Abhilfe schaffen. Der Erfindung liegt die Aufgabe zugrunde, ein Hebezeug zu schaffen, das es gestattet, mit einem in die Unterflasche integrierten Meßaufnehmer zu arbeiten, dabei Steuerkabel zwischen Meßaufnehmer und Hebezeug zu vermeiden. Gemäß der Erfindung wird diese Aufgabe nach dem Anspruch 1 gelöst. Störungen, die durch die synchron notwendige Auf- und Abwicklung des Steuerkabels mit dem Tragmittel auftreten können, sind vermieden.

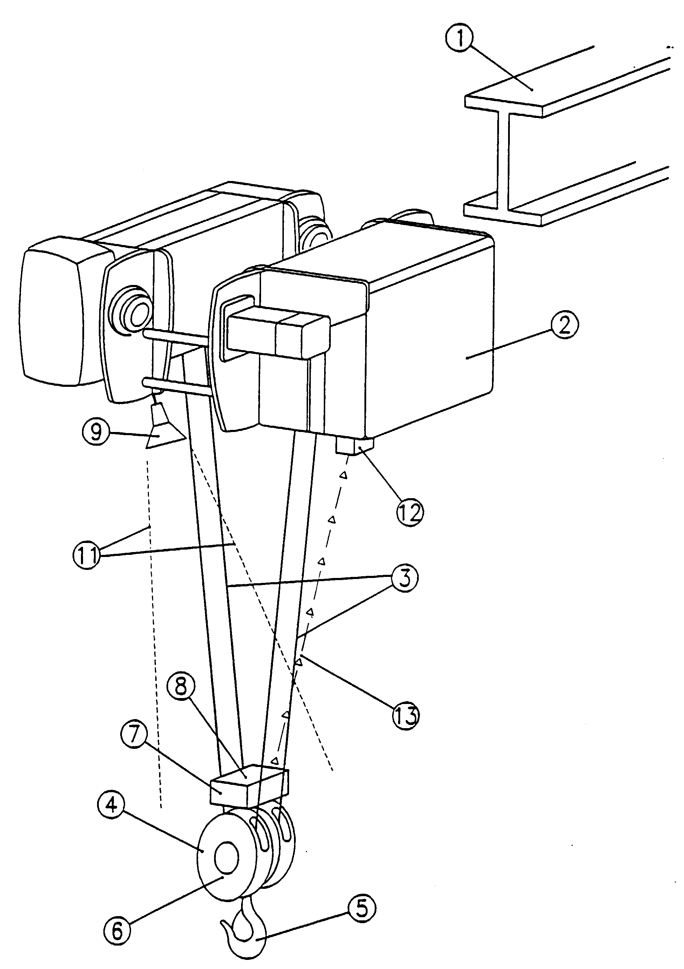

Ausgestaltungen und Weiterbildungen der Erfindung sind in den abhängigen Ansprüchen beschrieben. Ein Ausführungsbeispiel der Erfindung ist in der einzigen Zeichnung dargestellt, die ein Strukturbild darstellt und nachfolgend beschrieben wird.

Entlang einer Kranbahn 1 ist ein Hebezeug 2 verfahrbar, welches nach Art eines Seilzugs ausgebildet ist. An dem Hebezeug 2 sind neben nicht im einzelnen bezeichneten Antrieben und Steuerungen für das Verfahren des Hebezeugs und für das Heben und Senken einer Last Oberflaschen vorgesehen, die über ein Seil 3 als Tragmittel mit einer Unterflasche 4 in Verbindung stehen. An der Unterflasche 4 ist ein Haken 5 befestigt.

In die Unterflasche 4 ist ein Meßaufnehmer 6 integriert. Auf der dem Hebezeug 2 zugewandten Seite ist an der Unterflasche 4 eine Meß-, Übertragungs- und Auswerteeinheit 7 befestigt. Die dem Hebezeug 2 zugewandte Fläche der Einheit 7 ist als Solarmodul 8 ausgebildet. An dem Hebezeug 2 befestigt und auf das Solarmodul 8 gerichtet ist eine Lichtquelle 9. Mittels der Lichtquelle 9 wird - wie durch Striche 11 symbolisiert - zusätzlich Licht auf das Solarmodul 8 für den Betrieb des Meßaufnehmers 6 und der Einheit 7 gelenkt. Ebenfalls auf der der Unterflasche 4 zugewandten Seite ist an dem Hebezeug 2 ein Empfänger 12 befestigt. Der Empfänger 12 dient der Aufnahme von Meßdaten, die durch Pfeilstriche 13 symbolisiert sind. In der Praxis stehen Lichtquellen 9 und Empfänger 12 nicht über das Hebezeug 2 vor, sondern sind innerhalb seines Umrisses untergebracht.

Die Energie zum Betrieb des Meßaufnehmers 6 wird drahtlos übertragen; im Ausführungsbeispiel von dem Hebezeug 2 auf den in die Unterflasche 4 integrierten Meßaufnehmer 6. Die Energie kann auch von einer Basisstation auf die Unterflasche 4 übertragen werden. Im Ausführungsbeispiel ist als Energieträger Licht verwendet. Die Energie wird aus dem an der Unterflasche befestigten Solarmodul 8 bezogen. Die durch das Solar modul 8 gesammelte Energie ist in einem nicht dargestellten Akkumulator speicherbar. Die ohne Verwendung zusätzlicher Mittel vorhandene Lichtintensität für das Solarmodul wird durch die Lichtquelle 9 verstärkt. Diese ist an dem Hebezeug 2 befestigt und auf das Solarmodul 8 ausgerichtet.

Auch die Meßdaten 13 werden als codierte Signale drahtlos auf das Hebezeug 2 übertragen. Eine Übertragung auf eine gesonderte Auswerteeinheit, die beispielsweise am Boden angeordnet ist, ist möglich. Die Übertragung der Meßdaten erfolgt durch eine Datenlichtschranke oder über Funk.

## Patentansprüche

1. Hebezeug mit einer Unterflasche (4), in die ein Meßaufnehmer (6) einer Lastmeßeinrichtung integriert ist, dadurch gekennzeichnet, daß Energie zum Betrieb des Meßaufnehmers (6) und durch den Meßaufnehmer (6) ermittelte lastproportionale Meßdaten nach und von der Unterflasche (4) drahtlos übertragen sind.

2. Hebezeug nach Anspruch 1, dadurch gekennzeichnet, daß die Energie zum Betrieb des Meßaufnehmers von dem Hebezeug (2) auf die Unterflasche (14) übertragen ist.

3. Hebezeug nach Anspruch 1, dadurch gekennzeichnet, daß die Energie zum Betrieb des Meßaufnehmers von einer Basisstation auf die Unterflasche übertragen ist.

4. Hebezeug nach einem der Ansprüche 1 bis 3, dadurch gekennzeichnet, daß als Energieträger Licht verwendet ist.

5. Hebezeug nach einem der Ansprüche 1 bis 4, dadurch gekennzeichnet, daß die Energie aus einem an der Unterflasche (4) befestigten Solarmodul (8) bezogen ist.

6. Hebezeug nach Anspruch 5, dadurch gekennzeichnet, daß die durch das Solarmodul (8) gesammelte Energie in einem Akkumulator gespeichert ist.

7. Hebezeug nach einem der Ansprüche 4 bis 6, dadurch gekennzeichnet, daß die Intensität des Lichts durch Verwendung einer zusätzlichen Lichtquelle (9) verstärkt ist.

8. Hebezeug nach einem der Ansprüche 1 bis 7, dadurch gekennzeichnet, daß die Meßdaten als codierte Signale drahtlos auf das Hebezeug (2) übertragen und zur Anzeige gebracht sind.

9. Hebezeug nach einem der Ansprüche 1 bis 7, dadurch gekennzeichnet, daß die Meßdaten als codierte Signale drahtlos auf eine von dem Hebezeug entfernte Auswerteeinrichtung übertragen und zur Anzeige gebracht sind.

10. Hebezeug nach Anspruch 8 oder 9, dadurch gekennzeichnet, daß die Übertragung der Meßdaten durch eine Datenlichtschranke erfolgt.

11. Hebezeug nach Anspruch 8 oder 9, dadurch gekennzeichnet, daß die Übertragung der Meßdaten über Funk erfolgt.

## Claims

1. Hoist with a lower block (4), in which is integrated a measuring sensor (6), **characterized by the fact that** energy for operation of the measuring sensor (6) and load-proportionate measured data determined by the measuring sensor (6) are transmitted to and from the lower block (4) by wireless means.

2. Hoist in accordance with Claim 1, **characterized by the fact that** the energy for operation of the measuring sensor (6) is transmitted from the hoist (2) to the lower block (4).

3. Hoist in accordance with Claim 1, **characterized by the fact that** the energy for operation of the measuring sensor (6) is transmitted from a base station to the lower block (4).

4. Hoist in accordance with one of Claims 1 to 3, **characterized by the fact that** light is used as source of energy.

5. Hoist in accordance with one of Claims 1 to 4, **characterized by the fact that** the energy is obtained from a solar module (8) attached to the lower block (4).

6. Hoist in accordance with Claim 5, **characterized by the fact that** the energy collected by the solar module (8) is stored in an accumulator.

7. Hoist in accordance with one of Claims 4 to 6, **characterized by the fact that** the intensity of the light is amplified by an additional light source (9).

8. Hoist in accordance with one of Claims 1 to 7, **characterized by the fact that** the measured data are transmitted by wireless means in the form of encoded signals to the hoist (2), and are displayed.

9. Hoist in accordance with one of Claims 1 to 7, **characterized by the fact that** the measured data are transmitted by wireless means in the form of encoded signals to an evaluator remote from the hoist, and are displayed.

10. Hoist in accordance with Claim 8 or 9, **characterized by the fact that** transmission of the measured data is effected by means of a data photosensor.

11. Hoist in accordance with Claim 8 or 9, **characterized by the fact that** transmission of the measured data is effected by radio.

## Revendications

1. Engin de levage muni d'une poulie basse (4), à laquelle est intégré un capteur (6) d'un dispositif de mesure de la charge, caractérisé en ce que l'énergie pour le fonctionnement du capteur (6) et les données de mesure proportionnelles à la charge, déterminées par le capteur (6), sont transmises sans fil en aval de la poulie basse (4) et par cette dernière.

2. Engin de levage suivant la revendication 1, caractérisé en ce que l'énergie pour le fonctionnement du capteur est transmise à la poulie basse (14) par l'engin de levage (2).

3. Engin de levage suivant la revendication 1, caractérisé en ce que l'énergie pour le fonctionnement du capteur est transmise à la poulie basse par une station de base.

4. Engin de levage suivant l'une des revendications 1 à 3, caractérisé en ce que le vecteur énergétique utilisé est de la lumière.

5. Engin de levage suivant l'une des revendications 1 à 4, caractérisé en ce que l'énergie est fournie par un module solaire (8), fixé sur la poulie basse (4).

6. Engin de levage suivant la revendication 5, caractérisé en ce que l'énergie, accumulée par le module solaire (8), est stockée dans un accumulateur.

7. Engin de levage suivant l'une des revendications 4 à 6, caractérisé en ce que l'intensité lumineuse est renforcée par une source de lumière (9) supplémentaire.

8. Engin de levage suivant l'une des revendications 1 à 7, caractérisé en ce que les données de mesure sont transmises sans fil à l'engin de levage (2), sous forme de signaux codés, et sont affichées.

9. Engin de levage suivant l'une des revendications 1 à 7, caractérisé en ce que les données de mesure sont transmises sans fil, sous forme de signaux codés, à une unité d'analyse distante de l'engin de levage, et sont affichées.

10. Engin de levage suivant l'une des revendications 8 et 9, caractérisé en ce que la transmission des données de mesure est assurée par une barrière lumineuse.

11. Engin de levage suivant l'une des revendications 8 et 9, caractérisé en ce que la transmission des données de mesure est assurée par radio.
